# EUROPEAN PATENT APPLICATION

(11) **EP 4 043 994 A1**
(43) Date of publication of application: **17.08.2022**
(21) Application number: 19948377.7
(22) Date of filing: 08.10.2019
(51) Int. Cl.: G06F 1/16

(54) **INFORMATION PROCESSING TERMINAL DEVICE COUPLING MECHANISM AND COUPLING METHOD**

(71) Applicant: Leomo, Inc., Boulder, Colorado 80301 (US)
(72) Inventor: KAJI Kunihiko, Tokyo 141-0031 (JP); TANIYAMA Satoru, Tokyo 141-0031 (JP)
(74) Representative: Grünecker Patent- und Rechtsanwälte PartG mbB
(86) International application number: PCT/JP2019/039669
(87) International publication number: WO 2021/070250

(57) **Abstract**

When an information terminal device having a GPS function, a communication function, and the like is coupled to a bicycle, a body, or another object to be fixed or supported, the degree of freedom of a coupling mechanism is enhanced to reduce design limitation, and user-friendliness and operability are improved.

A coupling mechanism for coupling an information terminal device 100 to an object includes a main body-side coupling portion 11 formed in a main body of the information terminal device 100 and an object-side coupling portion 12 disposed on the object side and coupled to the main body-side coupling portion 11. The object-side coupling portion 12 includes engagement portions 12a and 12b engaged with the main body-side coupling portion 11, and a plurality of types of function adding units 0 for exchangeably adding a function to the information terminal device 100 via the engagement portions 12a and 12b.

## Description

### Technical Field

The present invention relates to a coupling mechanism and a coupling method for an information processing terminal device for coupling and fixing or supporting an information terminal device having a GPS function, a communication function, and the like to a bicycle, a body, or another object.

### Background Art

In recent years, miniaturization, weight reduction, and multi-functionalization of information terminal devices have progressed, and various information processing terminals that can be attached to and detached from an object such as a body of a user or a handlebar of a bicycle have been proposed (e.g., Patent Literature 1). Since such an information processing terminal is lightweight and has a communication function with various sensors such as a heart rate sensor in addition to a clock function and a GPS function, a system for recording or monitoring a body motion of a wearer during running, walking, sports training such as a bicycle, or exercise have been developed (e.g., Patent Literature 2).

According to the system disclosed in the above patent literature, a device for measuring a motion parameter is attached to a shoe sole of a user, the motion parameter obtained by monitoring an exercise person during an exercise activity is compared with basic baseline data, and real-time feedback during the exercise activity can be given to the user by changing the music to be played in accordance with whether or not the comparison result is within an allowable range.

### Citation List

### Patent Literature

Patent Literature 1: JP 2001-103536 A
Patent Literature 2: JP 2013-215590 A

### Summary of Invention

### Technical Problem

However, various products are provided from companies in accordance with an object to be coupled, such as a mounting tool used for mounting a terminal device to a handlebar of a bicycle and a belt for wearing a terminal device on a body of a user, and an adapter for coupling the terminal device is required in accordance with a product used by the user. Accordingly, an attachment procedure or the like based on a correspondence relationship between products tends to be complicated, leading to impairment of user-friendliness and cumbersomeness of attachment work and the like.

In particular, depending on an information processing terminal or a product to be attached, there are various design limitations such as a case where a sufficient thickness for screwing cannot be secured due to miniaturization and thinning, or a case where a portion for screwing cannot be secured due to interfaces of components, such as an arrangement condition of a battery or the like. Such limitations may deteriorate user-friendliness and operability.

The present invention solves the above problems, and an object of the present invention is to provide a coupling mechanism and a coupling method for an information processing terminal device, both of which can enhance the degree of freedom of the coupling mechanism to reduce design limitations and improve user-friendliness and operability when an information terminal device having a GPS function, a communication function, and the like is coupled to a bicycle, a body, or another object to be fixed or supported.

### Solution to Problem

In order to solve the above problems, the present invention provides a coupling mechanism configured to couple an information processing terminal device to an object, the coupling mechanism including: a main body-side coupling portion formed in a main body of the information processing terminal device; and an object-side coupling portion disposed on the object side and coupled to the main body-side coupling portion.

In the above invention, the object-side coupling portion preferably includes an engagement portion engaged with the main body-side coupling portion, and a plurality of types of function adding units each configured to exchangeably add a function to the information processing terminal device via the engagement portion.

In the above invention, the plurality of types of function adding units preferably include a power storage unit configured to supply electric power to the information processing terminal device or a protector configured to protect the main body of the information processing terminal device. In the above invention, it is preferable to further include an adjuster interposed between the object and a function adding unit of the plurality of types of the function adding units, the adjuster being couplable to the plurality of types of function adding units in common. Furthermore, in the above invention, the information processing terminal device preferably includes a position measurement unit configured to measure a current position of the own device, and the object is preferably a bicycle or a mounting unit attached to the bicycle.

### Advantageous Effects of Invention

As described above, according to these inventions, when an information terminal device having a GPS function, a communication function, and the like is fixed to or supported by a power mount (battery pack), or an adapter or a mounting unit for coupling the information processing terminal device to a bicycle, a body, or another object, the main body-side coupling portion directly formed to the main body of the information processing terminal device and the object-side coupling portion disposed on the object side and coupled to the main body-side coupling portion are engaged with each other. Accordingly, portability and operability of the information terminal device can be improved.

In addition, since the information terminal device can be further coupled to a mounting unit of a bicycle or the like via a device or a tool for adding an additional function, such as a power mount or an adapter having a function of wearing itself on a body, the degree of freedom in fixing or carrying the information terminal device can be enhanced, and design limitations can be reduced.

Furthermore, by using an adjuster couplable to a plurality of types of function adding units in common between the function adding unit and the object, user-friendliness and operability can be further improved. Note that the adjuster preferably further has a function of relatively changing and fixing an attachment angle with respect to the object.

### Brief Description of Drawings

Fig. 1 is a perspective view illustrating an example in which a coupling mechanism according to an embodiment is applied to a power mount (power storage unit), in which (a) illustrates a state in which an information processing terminal and the power mount are separated, and (b) illustrates a state in which the information processing terminal and the power mount are coupled.
Fig. 2 is a perspective view illustrating an example in which the coupling mechanism according to the embodiment is applied to the power mount, in which (a) illustrates a state before the coupling mechanism is attached, and (b) illustrates a state in which the coupling mechanism is attached.
Fig. 3 is a perspective view illustrating a use state in which the coupling mechanism according to the embodiment is applied to the power mount and coupled to a mounting tool for a bicycle.
Fig. 4 is a perspective view illustrating a state in which the coupling mechanism according to the embodiment is applied to the power mount and coupled to the mounting tool for a bicycle.
Fig. 5 is a perspective view illustrating an example in which the coupling mechanism according to the embodiment is applied to an adapter, in which (a) illustrates a state in which the information processing terminal and the adapter are separated, and (b) illustrates a state in which the information processing terminal and the adapter are coupled.
Fig. 6 is a perspective view illustrating a use state in which the coupling mechanism according to the embodiment is applied to the adapter and coupled to the mounting tool for a bicycle.
Fig. 7 is a cross-sectional view illustrating an example in which the coupling mechanism according to the embodiment is applied to the power mount.
Fig. 8 is a cross-sectional view illustrating an example in which the coupling mechanism according to the embodiment is applied to the adapter.
Fig. 9 is a perspective view illustrating a coupling mechanism according to a modification.
Fig. 10 is an explanatory diagram illustrating a mode of use of a motion capture system according to an embodiment.
Fig. 11 is an example of body motion reproduction data acquired in an embodiment.
Fig. 12 is a block diagram illustrating an internal configuration of each device according to embodiments.
Fig. 13 is a sequence diagram illustrating a motion capture method according to an embodiment.

### Description of Embodiments

Hereinafter, embodiments of the present invention will be described with reference to the drawings. Note that the embodiments described below exemplify a device or the like for embodying the technical idea of this invention, which does not specify the material, shape, structure, arrangement, and the like of each component as described below. Various modifications can be made to the technical idea of this invention within the scope of the claims.

### (Configuration of Coupling Mechanism)

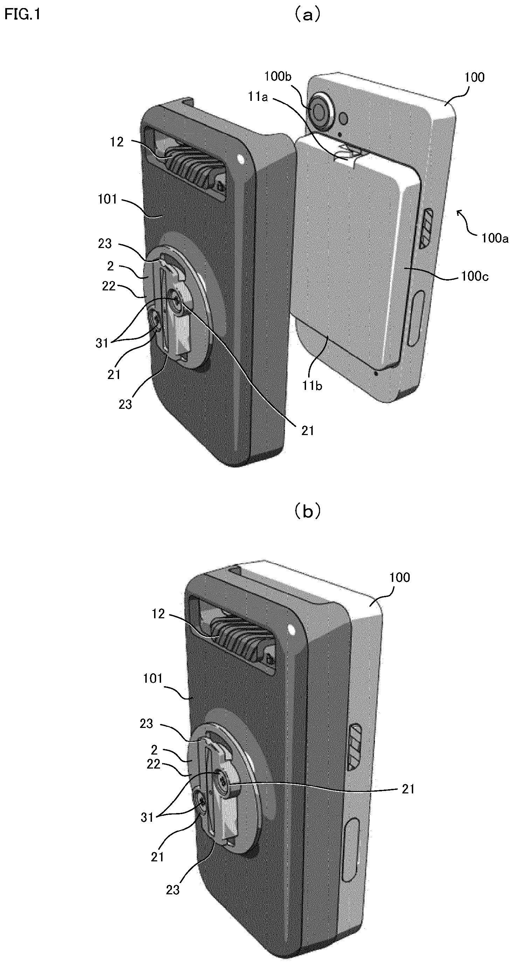

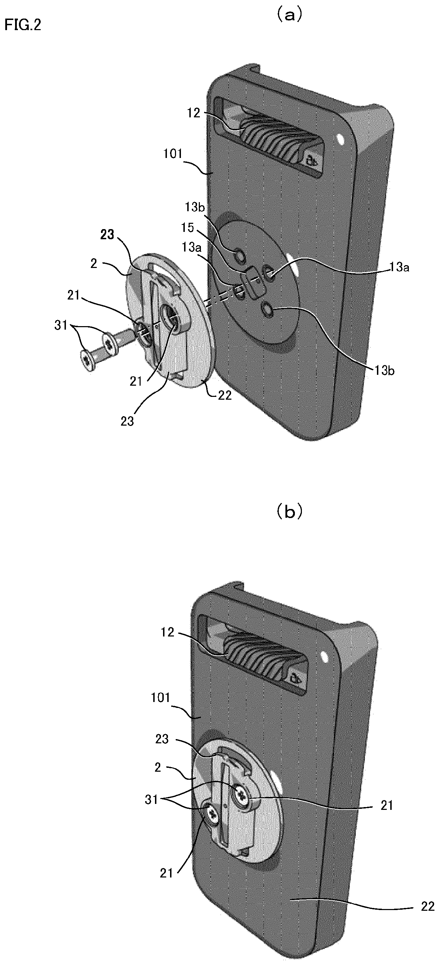

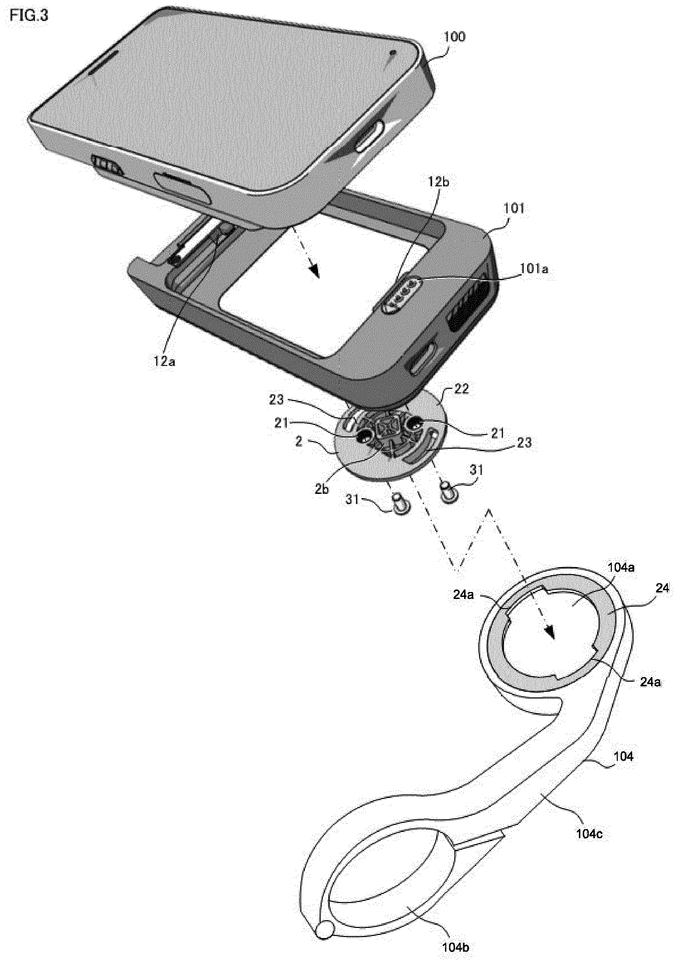

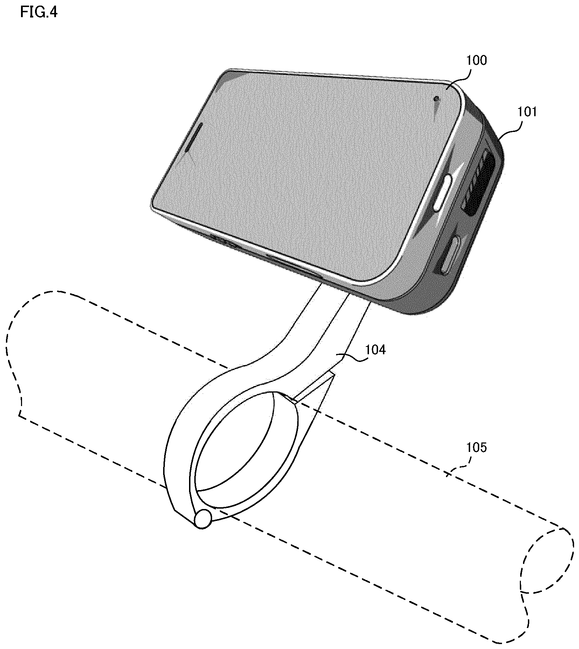

Figs. 1 to 6 illustrate an example in which a coupling mechanism and a coupling method according to the present embodiment are applied to a power mount (battery pack) or an adapter. Here, a case where an information terminal device 100 is combined with a power mount 101, which is an object, and coupled to a handlebar 105 of a bicycle via the combined power mount 101 will be described as an example.

The coupling mechanism according to the present embodiment includes a mechanism for coupling the information terminal device 100 to the power mount 101 or an adapter 102 that is the objects, and includes a main body-side coupling portion 11 formed on the back face side of the main body of the information terminal device 100 and an object-side coupling portion 12 disposed on the power mount 101 side and coupled to the main body-side coupling portion 11.

The information terminal device 100 is an electronic device having a GPS function, a communication function, and the like, such as a smartphone and a wearable terminal. In the present embodiment, the information terminal device 100 has a function of collecting detection signals from various sensors worn on the body of the athlete and recording body motion, and a function of recording a movement trajectory detected by a GPS which is a position measurement unit for measuring a current position of the own device, by being worn on the body or mounted on a bicycle by the athlete. In addition, the information terminal device 100 includes a camera 100b for photographing and a liquid crystal display 100a for displaying various types of information on the main body front face side. The main body-side coupling portion 11 includes claw portions 11a and 11b formed on upper and lower portions of a protrusion 100c formed on the back face side of the information terminal device 100. The object-side coupling portion 12 disposed on the power mount 101 side includes engagement portions 12a and 12b to be engaged with the respective claw portions 11a and 11b of the main body-side coupling portion 11.

On the other hand, as illustrated in Figs. 1 to 4, the power mount 101 is one of function adding units for exchangeably adding a function to the information terminal device 100, and is a power storage unit (battery pack) for supplying electric power for charging the information terminal device 100 to the information terminal device 100 through a connection terminal 101a. The power mount 101 serves as the object-side coupling portion 12 and includes the engagement portions 12a and 12b each engaged with the respective claw portions 11a and 11b of the main body-side coupling portion 11. The power mount 101 is added as a charging function for the information terminal device 100 via the engagement portions 12a and 12b.

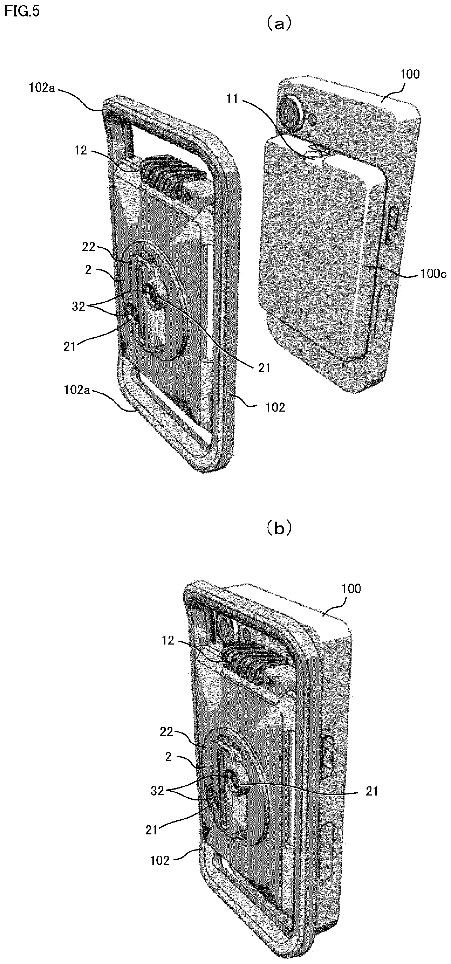

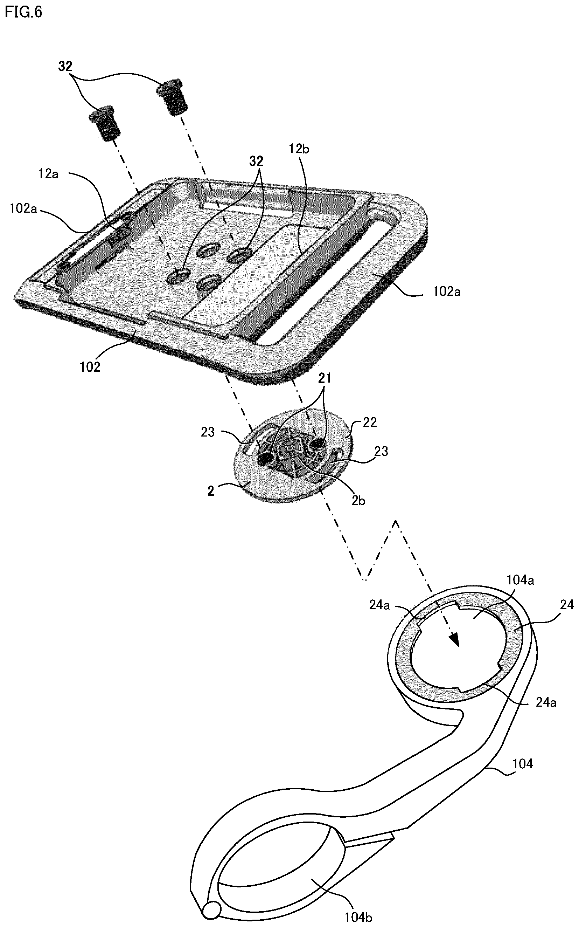

On the other hand, the adapter 102 is one of function adding units for exchangeably adding a function to the information terminal device 100, and provides a function as a protector for protecting the main body of the information terminal device 100. Specifically, as illustrated in Figs. 5 and 6, the adapter 102 is coupled to the back face of the information terminal device 100 to cover and protect the periphery of the information terminal device 100, and has a buckle portion 102a through which a wristband, a belt, or the like is inserted. The adapter 102 serves as the object-side coupling portion 12 and includes the engagement portions 12a and 12b each engaged with the respective claw portions 11a and 11b of the main body-side coupling portion 11. The adapter 102 is added as a protection function for the information terminal device 100 via the engagement portions 12a and 12b.

The power mount 101 and the adapter 102 include an adjuster 2 interposed between the information terminal device 100 and an object such as a mounting unit for a bicycle, and being couplable to the object.

The adjuster 2 is a component interposed between a mounting unit 104 and a function adding unit such as the power mount 101 or the adapter 102, and is designed to be couplable to a plurality of types of function adding units in common. Specifically, the adjuster 2 includes a base 22 having a disk shape, screw holes 21 for fixing the adjuster 2 to the function adding unit side, and flange portions 23 for fixing the adjuster 2 to the mounting unit 104 side. In the present embodiment, these portions are integrally formed from a material such as a synthetic resin, for example, plastic. The base 22 having a disk shape is a thin plate-shaped member, has a positioning portion 2b having a square cross section protruding at the center on the back face side abutted on the function adding unit side, and has the flange portions 23 to be engaged with a ring member 24 formed on the joint face 104a of the mounting unit 104 on the front face side.

In order to suit to the adjuster 2, screw holes 13 (13a and 13b) are formed in an abutting face of the function adding unit (the power mount 101 or the adapter 102) at a position matching the screw hole 21 on the adjuster 2 side, and a recess 15 having a square cross section to which the positioning portion 2b on the adjuster 2 side is fitted is formed.

In the present embodiment, the screw holes 13 on the abutting face of the adjuster 2 are disposed at four places, and the screw holes 21 and 21 on the adjuster 2 side are disposed on a line inclined by 45° with respect to a straight line connecting the flange portions 23 and 23 so as to be screwed into a pair of the screw holes (13a and 13a, or 13b and 13b) located on a diagonal line among the four screw holes 13a, 13a, 13b and 13b. In addition, the recess 15 is formed at a position where diagonal lines each connecting a pair of the screw holes 13a and 13a (or 13b and 13b) diagonally positioned intersect, and each side of the square shape of the recess 15 is set to correspond to the four screw holes 13a, 13a, 13b, and 13b, respectively.

In this way, when the positioning portion 2b on the adjuster 2 side is fitted into the recess 15, since the cross-sectional shape of the recess 15 is square, the attachment angle is changed by 90°, and the pair of the screw holes 13a and 13a (or 13b and 13b) with which the screw holes 21 and 21 match can be selected. As a result, by relatively changing the attachment angle of the adjuster 2 with respect to the object by 90°, whether the information terminal device 100 is directed vertically or horizontally can be selected before the information terminal device 100 is fixed to the mounting unit 104.

The mounting unit 104 is a fixture attached to a handlebar of a bicycle and fixing the information terminal device 100 by using the mounting unit 104. The mounting unit 104 includes a grip portion 104b having a ring shape and coupled and fixed so as to grip the outer periphery of the handlebar, and an arm portion 104c that couples the grip portion 104b and the joint face 104a and supports the joint face 104a at a position twisted by 90°. To the joint face 104a, the ring member 24 to which the flange portions 23 on the function adding unit side are hooked and to which the adjuster 2 is connected is attached.

The ring member 24 is formed with widened portions 22a into which the flange portion 23 is inserted. The widened portion 22a is a recess formed in the shape identical to the flange portion 23 having a substantially rectangular shape. The flange portions 23 are each inserted from the respective widened portions 22a and the adjuster 2 is rotated, whereby the flange portions 23 sandwich and engage with the ring member 24, and the adjuster 2 is fixed to the joint face 104a. As this time, by relatively changing the attachment angle of the adjuster 2 with respect to the object by 90°, whether the information terminal device 100 is directed vertically or horizontally can be selected before the information terminal device 100 is fixed to the mounting unit 104.

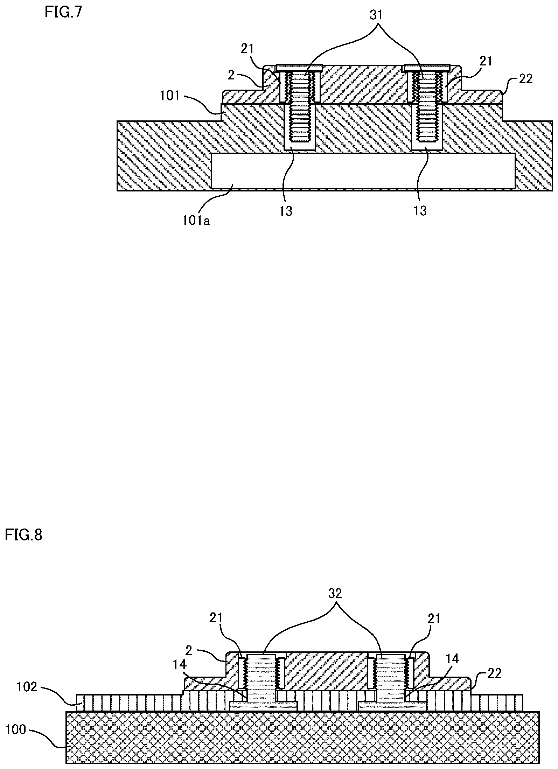

Further, the screw holes 21 of the adjuster 2 are holes each passing through the adjuster 2 from the front to the back thereof, through which the screw can be inserted from both the front and the back of the adjuster 2. Figs. 7 and 8 are cross-sectional views illustrating the relationship between the adjuster 2 and the power mount 101 or the adapter 102 that serves as a function adding unit.

As illustrated in Fig. 8, the screw holes 21 of the adjuster 2 are each threaded with a female screw having a large diameter so as to be screwed with a large-diameter 4 mm screw 32, and the large-diameter 4 mm screw 32 can be fixed. However, a small-diameter 3 mm screw 31 can only be inserted into the screw holes 21, but not screwed thereinto. On the other hand, the screw holes 13 into which the large-diameter 4 mm screw 32 is screwed are formed on the power mount 101 side.

Therefore, although the small-diameter 3 mm screw 31 can be fixed to the screw hole 13, the large-diameter 4 mm screw 32 cannot be inserted into the screw hole 21 and is not screwed into the screw hole 13. On the other hand, as illustrated in Fig. 7, insertion holes 14 into which the large-diameter 4 mm screw 32 is only inserted but is not screwed are formed on the adapter 102 side. Therefore, when the 4 mm screw 32 is inserted from the face of the adjuster 2 on the side in contact with the information terminal device 100, the 4 mm screw 32 is screwed and fixed to the screw hole 21 on the adjuster 2 side with only being inserted through but not being screwed into the insertion hole 14 side.

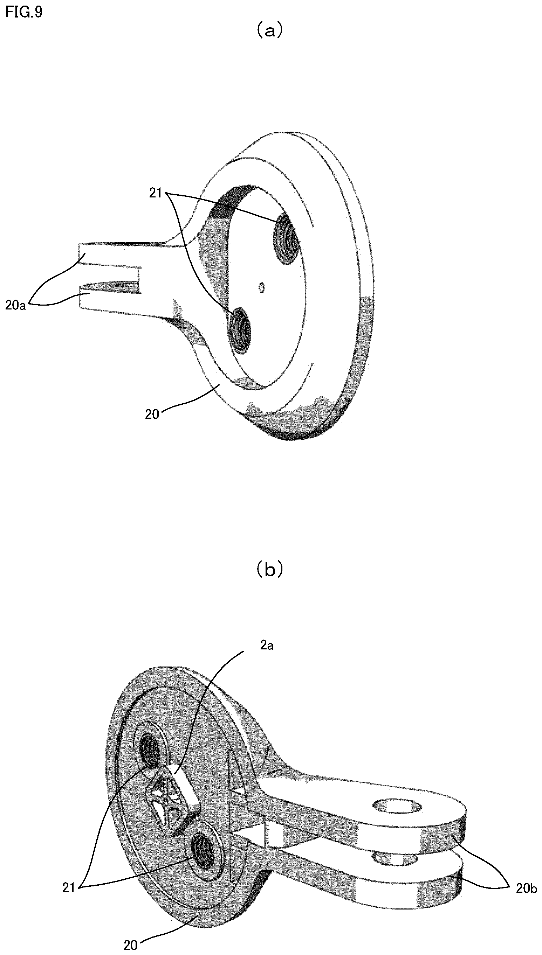

As the adjuster, as denoted by a reference sign 20 in Fig. 9 for example, joining units 20a for coupling to another object may be formed directly on an adjuster 20. Also in this case, the 4 mm screw hole 21 is configured as follows: the 4 mm screw holes 21 are each threaded with a female screw having a large diameter so as to be screwed with the large-diameter 4 mm screw 32, and the large-diameter 4 mm screw 32 can be fixed; but the small-diameter 3 mm screw 31 can only be inserted into the screw hole 21, but not screwed thereinto.

### (Configuration of Motion Capture System)

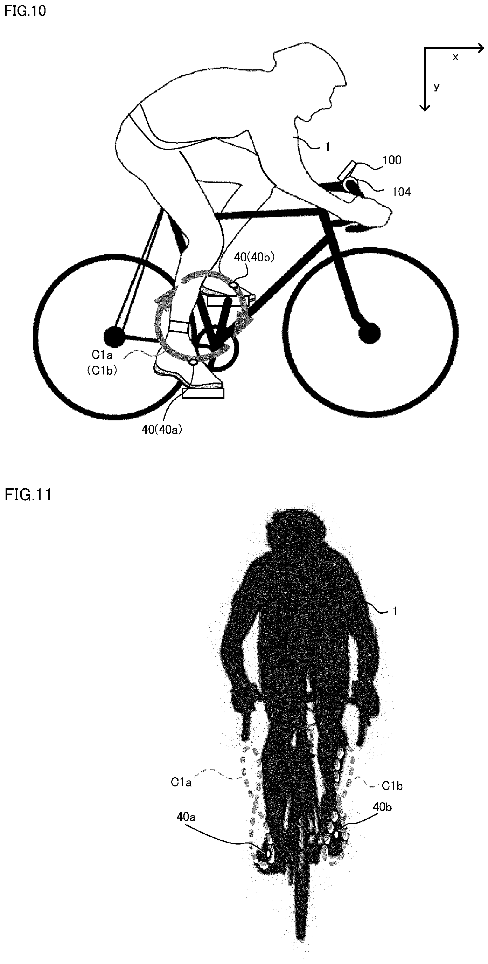

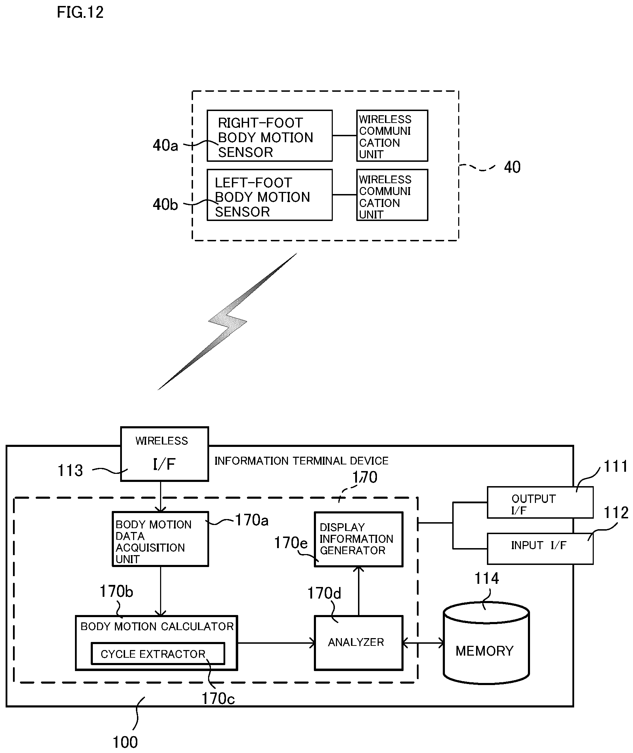

Fig. 10 is an explanatory diagram illustrating a mode of use of a motion capture system using the information terminal device 100 according to the present embodiment, and Fig. 11 is an example of body motion reproduction data acquired by the motion capture system according to the present embodiment. Fig. 12 is a block diagram illustrating an internal configuration of each device.

As illustrated in Figs. 10 to 12, the motion capture system according to the present embodiment includes the information terminal device 100 worn by a wearer 1, and body motion sensors 40 (40a and 40b) worn on each body site of the wearer and wirelessly connected to the information terminal device 100. Note that, in the present embodiment, a system can be basically constructed within a range in which near field communication between the information terminal device 100 and the body motion sensor 40 can construct the system. The system can be operated offline as a so-called standalone system without being connected to a server or the like on a communication network during actual measurement.

### (Configuration of Each Device)

### (1) Body Motion Sensor

The body motion sensors 40a and 40b are a pair of sensors that are attached to a site where the cyclic motion of the wearer 1 is performed. The body motion sensors 40a and 40b detect three-dimensional displacement or acceleration of each site. In the present embodiment, the body motion sensors 40a and 40b are each attached to a site below both ankles of the wearer 1, and include a right-foot body motion sensor 40a attached to the instep of the right foot of the wearer and a left-foot body motion sensor 40b attached to the instep of the left foot of the wearer. The body motion sensors 40a and 41b are equipped with a three-axis accelerometer for measuring acceleration of an object, a three-axis gyroscope for detecting angular velocity of the object, and a three-axis magnetic sensor for measuring the magnitude and direction of a magnetic field, and can detect motion in nine axes.

Each body motion sensor 40 can be attached to and detached from a shoe or the like of the wearer by a member such as a clip, and the wearer can perform measurement by attaching and detaching each sensor in a daily sense of putting on or taking off the shoe. Continuous measurement can be performed without imposing a burden on the wearer.

As illustrated in Fig. 12, each of the body motion sensors 40 (each of the body motion sensors 40a and 40b) includes a wireless communication unit. The wireless communication unit has an antenna therein, and can perform a communication processing with the information terminal device 100 by a function of executing a data communication protocol of near field communication, implemented by Bluetooth (registered trademark) Low Energy (BTLE), i.e., Bluetooth (registered trademark) 4.0, or the like. In the present embodiment, the wireless communication unit of each body motion sensor 40 adopts BTLE as a protocol for low power consumption communication, but for example, ANT, ANT+, or the like can also be adopted. Further, normal Bluetooth (registered trademark) can also be adopted.

### (2) Information Terminal Device

More specifically, the information terminal device 100 can be selectively combined with the adapter 102 or the power mount 101 by a common coupling mechanism. Accordingly, in the present embodiment, the information terminal device 100 can be worn as a wristband on an arm or the like of a user by using the adapter 102 as a wearing terminal, or can be attached to a handlebar portion of a bicycle or the like by coupling the power mount 101 via the adapter 102. As a result, one (one type of) information terminal device can be continuously used for both event, bicycle racing and running, and sensors worn on the body can also be seamlessly used while being continuously worn in both bicycle racing and running.

In the information terminal device 100, a GPS antenna and a wireless antenna are disposed in an exterior case. The GPS antenna is an antenna for wireless communication for acquiring satellite information such as satellite orbit information, GPS time information, or location information included in a navigation message from a satellite signal in a 1.5 GHz band extracted by a surface acoustic wave (SAW) filter (not illustrated). The GPS antenna is formed of a conductive member such as stainless steel. The wireless antenna built in the information terminal device 100 is an antenna for Bluetooth (registered trademark) Low Energy (BTLE) which is an ultra-low electric power near field wireless standard, and is used for performing communication with various sensors and other small devices worn on the body. This wireless antenna is also formed of a conductive member such as stainless steel.

In addition, in the present embodiment, the information terminal device 100 is provided with an operation button for manual operation by the user on the side face thereof, and a touch panel, an LED for displaying a state, and the like are disposed on the front face of the information terminal device 100. In the present embodiment, the information terminal device 100 further has a waterproof function, and also has a function of processing radio waves (radio signals) from GPS satellites to acquire and display speed information and location information. Furthermore, the information terminal device 100 may have a built-in acceleration sensor or the like to provide a function as an activity meter based on measurement of acceleration due to body motion.

Next, an internal configuration of the information terminal device 100 according to the present embodiment will be described. Specifically, as illustrated in Fig. 12, the information terminal device 100 includes a wireless interface 113, a controller 170, a memory 114, an output interface 111, and an input interface 112.

More specifically, the information terminal device 100 according to the present embodiment has a function of collecting detection results detected by the body motion sensors 40, and can acquire detection results by performing communication processing with each body motion sensor 40 through the wireless interface 113. The memory 114 of the information terminal device 100 functions as a body motion recorder that records, as body motion data, detection results detected by the body motion sensor 40. Here, the body motion data is raw data detected by various sensors, and data obtained by recording and analyzing the body motion data, and extracting necessary information therefrom or correcting the body motion data is body motion reproduction data.

To the detection result transmitted from each body motion sensor 40, sensor identification information for identifying each body motion sensor 40 is added. The identification information is accumulated in the memory 114 of the information terminal device 100, and the controller 170 can determine from which body motion sensor 40 the detection result is acquired when the detection result is acquired from the wireless interface 113. Note that the identification information includes wearing site information for identifying a site at which each sensor is worn, and the body motion reproduction data can be calculated on the basis of the wearing site information. Furthermore, the body motion data also includes time information when the detection result is acquired from each body motion sensor 40.

The information terminal device 100 includes the wireless interface 113 as a communication function. The wireless interface 113 is a module that controls transmission and reception of various types of information via a communication network and near field communication such as Wi-Fi and Bluetooth (registered trademark). The wireless interface 113 communicates with each body motion sensor 40 in accordance with various protocols and transmits and receives data to and from the above-described server device or the like by 3G communication.

Furthermore, the information terminal device 100 includes the output interface 111 that displays or outputs an analysis result for the body motion reproduction data, and the display information generated by a display information generator 170e is displayed on the liquid crystal display 100a through the output interface 111.

Furthermore, in the present embodiment, the information terminal device 100 has a function of analyzing the body motion of the wearer and generating body motion reproduction data on the basis of the body motion data acquired from each sensor. Specifically, as illustrated in Fig. 12, the information terminal device 100 includes the controller 170. The controller 170 is an arithmetic processing unit such as a CPU that performs various operations necessary for controlling each unit. Note that, in the controller 170, each function of the liquid crystal display 100a is virtually constructed on the controller 170 by executing the motion capture program of the present invention. More specifically, in the controller 170, a body motion data acquisition unit 170a, a body motion calculator 170b, a cycle extractor 170c, an analyzer 170d, and the display information generator 170e are virtually constructed by execution of a motion capture application.

The body motion data acquisition unit 170a is a module that acquires body motion data from each body motion sensor 40 via the wireless interface 113. In the present embodiment, the body motion data acquisition unit 170a wirelessly communicates with each of the body motion sensors 40a to 41e to acquire body motion data that are detection results thereof. The body motion data is temporarily accumulated in the memory 114, and thereafter, detection results detected by the body motion sensors 40 are transmitted to the body motion calculator 170b.

The body motion calculator 170b is a module that calculates the body motion of the wearer as body motion reproduction data on the basis of the detection results detected by the body motion sensors 40a and b and accumulated in the memory 114 (body motion recorder), displacement and rotation of the body motion sensors 40, and the acceleration of the displacement and the rotation. Here, detection results detected by the body motion sensors 40 are each a value measured by a so-called 9-axis sensor. In the present embodiment, the detection results are the direction and the magnitude of acceleration (including acceleration of gravity) acting on an object, the angular velocity (size, direction, and center position) of the object, and the magnitude and the direction (bearing) of a magnetic field.

Here, the calculated body motion includes an index of smoothness of pedaling, an angular velocity ω of a pedal shaft of a bicycle, a temporal change of the angular velocity ω, and smoothness of the change. In the present embodiment, the body motion sensors 40 are attached to the right and left shoes, and the rotational motion detected by the sensors is the rotation of the shoes. However, in the case of pedaling a bicycle, since the shoes rotate about the pedal shaft, the angular velocity of the pedal shaft is set to ω.

Furthermore, in the present embodiment, the body motion calculator 170b includes the cycle extractor 170c. The cycle extractor 170c extracts a cyclic change included in body motion on the basis of the body motion reproduction data accumulated in the memory 114. The cyclic change includes not only simple circular motion but also complicated free orbital trajectories C1 and C2 in which three-dimensional and figure-of-eight or wave-like motions are combined as illustrated in Fig. 11.

In the present embodiment, the orbiting motion of the right-foot body motion sensor 40a attached to the instep of the right foot of the wearer 1 is extracted as C1a, and the orbiting motion of the left-foot body motion sensor 40b attached to the instep of the left foot of the wearer is extracted as C1a. As for these orbiting motions, C1a and C1b each perform an orbiting motion whose main component is a direction along a plane xy including a traveling direction x of the wearer 1 and a vertical direction y during running and during bicycle racing. Note that the analyzer 170d also has a function of analyzing the pattern of the orbiting motion, and by extracting the features of the orbiting motion, the analyzer 170d can automatically discriminates an event of a competition currently being played and switch the processing setting suitable for the event.

In the present embodiment, the body motion calculator 170b calculates the body motion of the wearer as the body motion reproduction data on the basis of detection results detected by the body motion sensors 40 and change characteristics of the orbiting motions of the body motion sensors 40. At this time, as illustrated in Fig. 11, the body motion calculator 170b calculates, for example, the three-dimensional free orbital trajectory C1 of each body motion sensor 40. Then, the body motion calculator 170b evaluates the disturbance to the orbiting motion on each of the right and left sides of the wearer on the basis of the calculated change in characteristics of the free orbital trajectories C1 (C1a and C1b). The body motion reproduction data is then calculated on the basis of the free orbital trajectories C1 calculated in this manner.

The analyzer 170d is a module that analyzes the body motion of the wearer 1 on the basis of the body motion reproduction data. In the present embodiment, the analyzer 170d functions as a characteristic analyzer that analyzes the characteristics of the angular velocity change in the cyclic motion extracted by the cycle extractor 170c. The characteristics analyzed here are displayed or output on the output device in association with the rotation angle of the cyclic motion extracted by the cycle extractor 170c.

Note that, as an analysis method by the analyzer 170d, three-dimensional image data in which the wearer 1 is three-dimensionally displayed may be generated on the basis of the body motion reproduction data. In addition, improvement data indicating a deviation from normal body motion, or the like may be generated by, for example, extracting model body motion data from the memory 114 in which model body motion data is accumulated and comparing the model body motion data with the body motion reproduction data of the wearer. Furthermore, by registering user information such as gender, height, weight, and age in advance, analysis based on each user information may be performed. Then, the analyzer 170d transmits analysis results of the three-dimensional image data, the improvement data, and the like to the information terminal device 100.

The display information generator 170e is a module that generates display information to be displayed on the output interface 111, and generates display information to display or output the characteristics analyzed by the analyzer 170d in association with the rotation angle of the cyclic motion extracted by the cycle extractor 170c. In this display information in the present embodiment, the cyclic motion extracted by the cycle extractor 170c is represented by a planar circle, the rotation angle at which each characteristic of the cyclic motion analyzed by the analyzer 170d appears is displayed by the center angle of the circle, the intensity of the characteristics of the cyclic motion is represented by the distance from the origin of the circle, and the change in characteristics of the cyclic motion is represented by a symbol, a figure, or a color or size thereof. Note that this display information includes an acoustic signal and other output control signals together with the display data.

The memory 114 is a storage device that records various data, and stores identification information for identifying each information terminal device 100, wearing site information of each body motion sensor 40, a relative positional relationship of the body motion sensor 40 worn at each site, the user information described above, model body motion data, and the like.

### (Motion Capture Method)

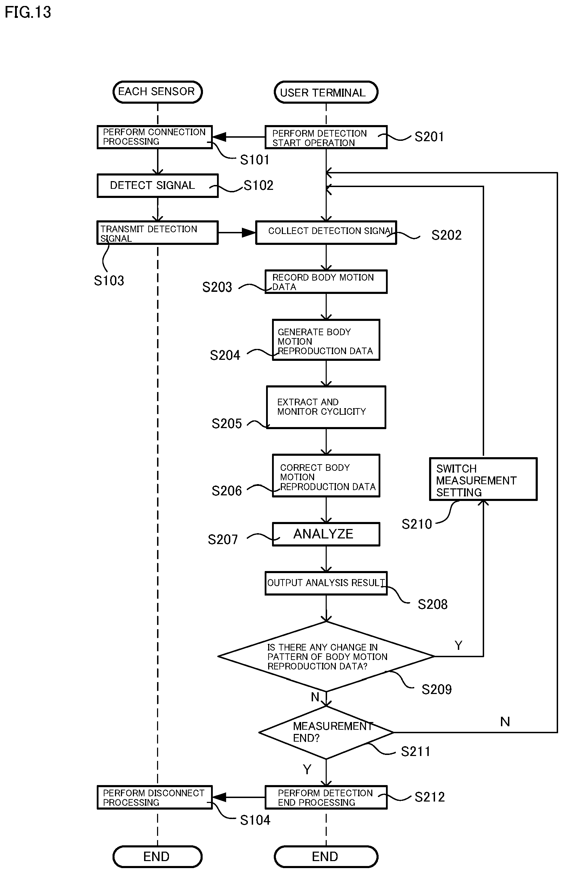

A motion capture method according to the present embodiment can be implemented by operating the motion capture system having the above configuration. Fig. 13 is a sequence diagram illustrating the motion capture method according to the present embodiment. Here, a case of performing coaching in bicycle racing will be described as an example.

First, the wearer 1 wears the body motion sensors 40a and 40b on both feet. In addition, the wearer 1 fixes the information terminal device 100 to the mounting unit 104 of a bicycle via the power mount 101 and the adjuster 2, and executes motion capture while charging the information terminal device 100 by using the power mount 101.

When the fixation of the information terminal device 100 is completed, operation is subsequently performed to acquire a detection result from each body motion sensor 40 (S201). At this time, an event of a competition may be selected by a user operation. Alternatively, a feature of the orbiting motion described above may be extracted, a preset event of competition may be automatically discriminated from the extracted pattern, and processing setting suitable for the event may be switched. With this function, even if an event of a competition is switched in the middle, measurement can be continued seamlessly without requiring special scanning.

Then, upon receiving detection start operation, the controller 170 of the information terminal device 100 performs a connection processing with each body motion sensor 40 when acquiring the operation signal (S101). After the connection processing is performed, each body motion sensor 40 detects the motion of the wearer 1. Specifically, the three-dimensional displacement or acceleration of each site is detected by the body motion sensor 40 attached to each site of the wearer's body (S102). Subsequently, each acquired detection result is transmitted to the wireless interface 113 of the information terminal device 100 by a weak radio wave via the wireless communication unit of each body motion sensor 40 (S103). When the wireless interface 113 of the information terminal device 100 acquires each detection result (S202), the memory 114 serving as a body motion recorder records the detection results detected by the body motion sensors 40a and 41b as body motion data (S203).

Thereafter, when the body motion data is acquired by the body motion data acquisition unit 170a, the cycle extractor 170c transmits detection results detected by the body motion sensors 40 to the body motion calculator 170b. The body motion calculator 170b calculates the body motion of the wearer as body motion reproduction data on the basis of detection results detected by the body motion sensors 40 accumulated in the body motion recorder and the relative positional relationship between the body motion sensors 40 (S204), and transmits the body motion reproduction data to the analyzer 170d. On the other hand, the analyzer 170d corrects, when the predetermined cycle arrives, the body motion reproduction data calculated by the body motion calculator 170b, on the basis of the detection results detected by the cycle extractor 170c (S206).

Further, the analyzer 170d analyzes the body motion of the wearer on the basis of the body motion reproduction data (S207). For the data of the analyzed analysis results, the analysis results are displayed or output by the liquid crystal display 100a, a sound from a speaker, or the like (S208). In the case where a change is detected in the pattern of the extracted orbiting motion or body motion reproduction data ("Y" in S209), the currently performed event of a competition can be automatically discriminated by collating the pattern, and the measurement setting can be switched to that suitable for the event of competition (S210). The above processing is continuously executed during the competition ("N" in S211), and as soon as the detection processing ends ("Y" in S211), communication with each sensor is disconnected (S212 and S104).

### (Motion Capture Program)

The motion capture system and the motion capture method according to the present invention described above can be implemented by executing the motion capture program of the present invention, which is described in a predetermined language on a computer similarly to the motion capture application described above. That is, by installing the program according to the present invention in a portable terminal device, a smartphone, a wearable terminal, an information processing terminal such as a mobile PC, an IC chip of a general-purpose computer such as a personal computer or a server computer, or a memory device and executing the program on the CPU, a system having the above-described functions can be constructed to implement the motion capture method.

### (Operation and Effect)

According to the present embodiment as described above, since the main body-side coupling portion 11 and the object-side coupling portion 12 directly formed on the main body of the information terminal device 100 are engaged with each other in the present embodiment, the portability and operability of the information terminal device 100 can be improved.

In addition, since the information terminal device 100 can be further coupled to the mounting unit 104 of a bicycle or the like via a device or a tool for adding an additional function, such as the power mount 101 or the adapter 102 having a wearing function on a body, the degree of freedom in fixing or carrying the information terminal device 100 can be enhanced, and design limitations can be reduced. Furthermore, by using the adjuster 20 couplable to a plurality of types of function adding units in common between the function adding unit and the object, user-friendliness and operability can be further improved.

In addition, in the present embodiment, the information terminal device 100 as described above is used to detect the body motion in the cyclic motion, such as pedaling the bicycle, and display or output the characteristics of the cyclic motion in association with the rotation angle. In this way, occurrence of disturbance of the form, disturbance of the rhythm, or the like at the time of pedaling the bicycle can be instantaneously understood. In the present embodiment, the body motion sensor 40 can be disposed on footwear worn below the ankle, such as sports shoes, and the body motion sensor can be worn together with the footwear. Therefore, the body motion sensor can be easily worn. Further, since the body motion sensor can be worn such that the wearing position and the wearing direction are freely set, usability can be improved.

In addition, in the motion capture program according to the present embodiment, for example, the motion capture program can be distributed via a communication line, and can be transferred as a packaged application operating on a standalone computer by recording the motion capture program on a computer-readable recording medium. The motion capture program can be recorded in various recording media. Specific examples thereof include a magnetic recording medium such as a flexible disk or a cassette tape, an optical disk such as a CD-ROM or a DVD-ROM, and a RAM card. Furthermore, according to the computer-readable recording medium in which this program is recorded, the above-described system and method can be easily implemented by using a general-purpose computer or a dedicated computer, and the program can be easily stored, transported, and installed.

Note that the present invention is not limited to the above-described embodiments as they are, and the constituents can be modified and embodied in the implementation phase without departing from the spirit thereof. In addition, various inventions can be made by appropriately combining a plurality of constituents disclosed in the above embodiments. For example, some constituents may be deleted from all the constituents provided in the embodiments.

### Reference Signs List

- C1, C2: Free orbital trajectory
- 1: Wearer
- 2: Adjuster
- 2b: Positioning portion
- 11: Main body-side coupling portion
- 11a, 11b: Claw portion
- 12: Object-side coupling portion
- 12a, 12b: Engagement portion
- 13, 13: Screw hole (3 mm)
- 14: Insertion hole
- 20: Adjuster
- 20a: Joining unit
- 21: Screw hole (4 mm)
- 22: Ring member
- 22a: Widened portion
- 23: Flange portion
- 31: 3 mm screw
- 32: 4 mm screw
- 40: Body motion sensor
- 40a, b: Body motion sensor
- 100: Information terminal device
- 100a: Liquid crystal display
- 100b: Camera
- 101: Power mount
- 101a: Connection terminal
- 102: Adapter
- 102a: Buckle portion
- 104: Mounting unit
- 104a: Joint face
- 104b: Grip portion
- 104c: Arm portion
- 111: Output interface
- 112: Input interface
- 113: Wireless interface
- 114: Memory
- 170: Controller
- 170a: Body motion data acquisition unit
- 170b: Body motion calculator
- 170c: Cycle extractor
- 170d: Analyzer
- 170e: Display information generator

## Claims

1. A coupling mechanism for an information processing terminal device, the coupling mechanism configured to couple the information processing terminal device to an object, the coupling mechanism comprising:
a main body-side coupling portion formed in a main body of the information processing terminal device; and
an object-side coupling portion disposed on the object side and coupled to the main body-side coupling portion.

2. The coupling mechanism for the information processing terminal device according to claim 1,
wherein the object-side coupling portion includes
an engagement portion engaged with the main body-side coupling portion, and
a plurality of types of function adding units each including the engagement portion and configured to exchangeably add a function to the information processing terminal device via the engagement portion.

3. The coupling mechanism for the information processing terminal device according to claim 2,
wherein the plurality of types of function adding units include a power storage unit configured to supply electric power to the information processing terminal device.

4. The coupling mechanism for the information processing terminal device according to claim 2,
wherein the plurality of types of function adding units include a protector configured to protect the main body of the information processing terminal device.

5. The coupling mechanism for the information processing terminal device according to any one of claims 2 to 4, the coupling mechanism further comprising
an adjuster interposed between the object and a function adding unit of the plurality of types of the function adding units, the adjuster being couplable to the plurality of types of function adding units in common.

6. The coupling mechanism for the information processing terminal device according to claim 5,
wherein the adjuster further has a function of relatively changing and fixing an attachment angle with respect to the object.

7. The coupling mechanism for the information processing terminal device according to claim 1,
wherein the information processing terminal device includes a position measurement unit configured to measure a current position of the information processing terminal device, and
the object is a bicycle or a mounting unit attached to the bicycle.

8. A coupling method for coupling an information processing terminal device to an object, the coupling method comprising
coupling an object-side coupling portion disposed on the object side to a main body-side coupling portion formed in a main body of the information processing terminal device.

9. The coupling method for the information processing terminal device according to claim 8,
wherein a plurality of types of function adding units each configured to exchangeably add a function to the information processing terminal device are engaged with the main body-side coupling portion via an engagement portion.

10. The coupling method for the information processing terminal device according to claim 9,
wherein the plurality of types of function adding units include a power storage unit configured to supply electric power to the information processing terminal device.

11. The coupling method for the information processing terminal device according to claim 9,
wherein the plurality of types of function adding units include a protector configured to protect the main body of the information processing terminal device.

12. The coupling method for the information processing terminal device according to any one of claims 9 to 11,
wherein an adjuster interposed between the object and a function adding unit of the plurality of types of function adding units is made couplable to the plurality of types of function adding units in common.

13. The coupling method for the information processing terminal device according to claim 12,
wherein the adjuster is fixed in a manner such that an attachment angle is relatively changed with respect to the object.

14. The coupling method for the information processing terminal device according to claim 8,
wherein the information processing terminal device includes a position measurement unit configured to measure a current position of the information processing terminal device, and
the object is a bicycle or a mounting unit attached to the bicycle.
